# EUROPÄISCHE PATENTANMELDUNG

(11) **EP 1 754 862 A1**
(43) Veröffentlichungstag der Anmeldung: **21.02.2007**
(21) Anmeldenummer: 05405481.2
(22) Anmeldetag: 17.08.2005
(51) Int. Cl.: F01D 25/00, F02C 6/12, F02C 7/30

(54) **Verdichter, Verdichterrad, Reinigungsaufsatz und Abgasturbolader**

(71) Anmelder: ABB Turbo Systems AG, 5400 Baden (CH)
(72) Erfinder: Mueller, Rudolf, 5417 Untersiggenthal (CH)
(74) Vertreter: ABB Patent Attorneys

(57) **Zusammenfassung**

Laufschaufeln (11) und Nabe (10) des Verdichterrades (1) werden mittels eines entlang der Rotationsachse (A) des Verdichterrades auf das Verdichterrad gerichteten Reinigungsflüssigkeitsstrahls (72) gereinigt. Der Reinigungsflüssigkeitsstrahl wird dabei von einer auf der Achse angeordneten und in Richtung des Verdichterrades entlang der Achse ausgerichteten Zuführdüse (51) zum Verdichterrad geleitet, bzw. gespritzt. Der Zuführstrahl (72) folgt dabei der Achse und trifft somit im Rotationszentrum des Verdichterrades auf die Nabe des Verdichterrades.

Damit wird erreicht, dass die Reinigungsflüssigkeit im Rotationszentrum des Verdichterrades auf das Verdichterrad auftrifft. Die Reinigungsflüssigkeit fliesst somit entlang der Nabenoberfläche und wird durch die Fliehkräfte radial in die radial äusseren Bereiche getragen.

## Beschreibung

### Technisches Gebiet

Die Erfindung bezieht sich auf das Gebiet der Reinigung von Verdichtern, insbesondere Verdichter von Abgasturboladern für Brennkraftmaschinen. Sie betrifft einen Verdichter mit einer Reinigungsvorrichtung gemäss dem Oberbegriff des Patentanspruchs 1 sowie einen Reinigungsaufsatz.

### Stand der Technik

Es ist bekannt, dass bei Verdichtern von Abgasturboladern für Brennkraftmaschinen das Ansaugen von verschmutzter Luft zu Verunreinigungen führen kann, insbesondere auf den Laufschaufeln und der Nabe des schnell rotierenden Verdichterrads. Die Verunreinigungen verursachen raue Oberflächen, welche innerhalb kurzer Zeit die Leistung des Verdichters massgeblich beeinträchtigen können.

Um die eingangs genannten Effekte zu vermeiden, werden Verdichter regelmässig gereinigt. Die Reinigung wird je nach Auslegung des Verdichters unter Voll- oder Teillast durchgeführt. Das Verdichterrad wird entsprechend bei voller oder reduzierter Umdrehungsgeschwindigkeit rotiert und eine Reinigungsflüssigkeit vor dem Verdichterrad der Strömung zugeführt.

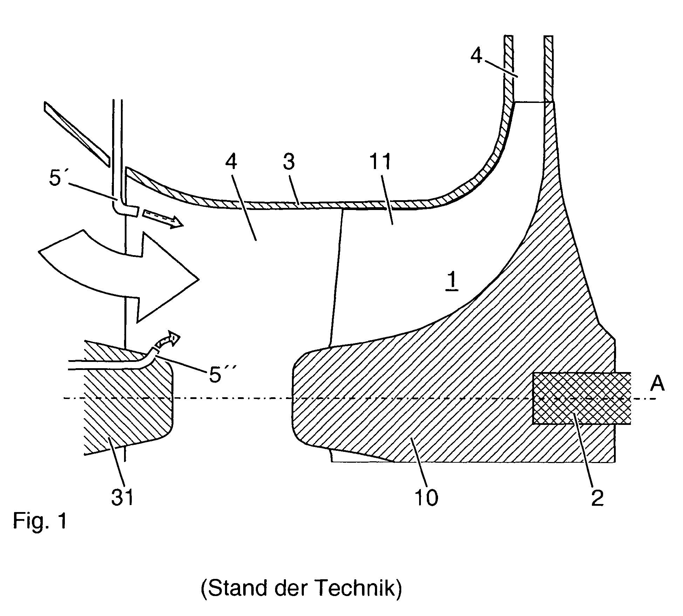

Fig. 1 zeigt die beiden am häufigsten verwendeten Reinigungsvorrichtungen. Zum Einführen der Reinigungsflüssigkeit in den Strömungskanal sind von radial ausserhalb des Verdichtergehäuses oder aber im Bereich eines Gehäusemittelstücks im radial inneren Bereich des Strömungskanals einfache Schläuche oder dünne Rohre in den Strömungsbereicht geführt. Durch diese Schläuche oder Rohre kann zum Reinigen des Verdichterrades zum geeigneten Zeitpunkt die benötigte Menge Reinigungsflüssigkeit eingespritzt werden. Die Reinigungsflüssigkeit wird von der Strömung erfasst und in den Bereich der Laufschaufeln des rotierenden Verdichterrades befördert. Aufgrund der hohen Rotationsgeschwindigkeit des Verdichterrades wird die Reinigungsflüssigkeit mehrheitlich in den radial äusseren Bereich der Laufschaufelflächen geschleudert. Der Wasserstrahl kann zudem aus kinematischen Gründen (Verhältnis der Geschwindigkeit der Verdichterlaufschaufeln zur Geschwindigkeit des Wasserstrahls) nicht genügend tief zwischen die Laufschaufeln eindringen. Insbesondere bei der Variante mit der radial aussenliegenden Reinigungsflüssigkeitszuführung kommt es vor, dass radial innere Bereiche der Laufschaufel und die Nabenoberfläche zwischen den Laufschaufeln von der Reinigungsflüssigkeit nicht erreicht werden können und so die Reinigungswirkung unbefriedigend ist.

Sollen diese, bei schnell rotierendem Verdichterrad nicht erreichbaren Bereiche effektiv gereinigt werden, muss die Brennkraftmaschine gedrosselt werden um die Rotationsgeschwindigkeit des Verdichterrads und damit die Geschwindigkeit der Verdichterlaufschaufeln zu senken.

Eine Reinigung mit herkömmlichen Reinigungsvorrichtungen führt somit nicht immer zu befriedigenden Ergebnissen.

### Kurze Darstellung der Erfindung

Die Aufgabe der vorliegenden Erfindung besteht folglich darin, einen Verdichter mit einer verbesserten Reinigungsvorrichtung zu schaffen, mit welcher der Verdichter auch mit schnell rotierendem Verdichterrad effektiv von Verunreinigungen befreit werden kann.

Die Aufgabe wird mit einem Verdichter mit den Merkmalen des Patentanspruchs 1, sowie mit einem Verdichterrad mit den Merkmalen des Patentanspruchs 11 und einem Reinigungsaufsatz für ein Verdichterrad mit den Merkmalen des Patentanspruchs 13 gelöst.

Erfindungsgemäss werden Laufschaufeln und Nabe des Verdichterrades mittels einem entlang der Rotationsachse des Verdichterrades auf das Verdichterrad gerichteten Reinigungsflüssigkeitsstrahl gereinigt. Der Reinigungsflüssigkeitsstrahl wird dabei von einer auf der Achse angeordneten und in Richtung des Verdichterrades entlang der Achse ausgerichteten Zuführdüse zum Verdichterrad geleitet, bzw. gespritzt. Der Zuführstrahl folgt dabei der Achse und trifft somit im Rotationszentrum des Verdichterrades auf die Nabe des Verdichterrades.

Damit wird erreicht, dass die Reinigungsflüssigkeit im radial innersten Punkt, dem Rotationszentrum, des Verdichterrades auf das Verdichterrad auftrifft. Auch wenn anschliessend die Reinigungsflüssigkeit von der starken Strömung erfasst wird und radial nach aussen getragen wird, ist gewährleistet, dass die Reinigungsflüssigkeit zumindest teilweise entlang der Nabenoberfläche fliesst und es dabei zur erwünschten Reinigung der Oberfläche kommt.

Um die Feinverteilung der Reinigungsflüssigkeit im Bereich der Nabenspitze zu verbessern sind in den abhängigen Ansprüchen diverse weitere Massnahmen vorgeschlagen.

Mit einem Strahlteiler im Rotationszentrum des Verdichterrades kann der Zuführstrahl gleichmässig geteilt und in radiale Richtung umgelenkt werden. Der Strahlteiler weist eine Spitze und vorteilhafterweise radial nach aussen gekrümmt abfallende Flanken auf. Damit kann der Zuführstrahl sanft abgelenkt werden, so dass er nicht von der Nabenoberfläche zurückspritzt.

Der Zuführstrahl kann weiter durch eine Zentralbohrung im Rotationszentrum des Verdichterrades aufgefangen werden. Besonders in Kombination mit dem Strahlteiler ergibt sich so ein optimaler Zwischenspeicher für die Reinigungsflüssigkeit. In der Zentralbohrung wird die Reinigungsflüssigkeit radial nach aussen getragen und in Umfangsrichtung beschleunigt. In der radialen Ausdehnung der Zentralbohrung bildet sich ein Ring aus Reinigungsflüssigkeit, welcher mit dem Verdichterrad mitdreht. Die Reinigungsflüssigkeit verteilt sich dadurch gleichmässig entlang dem Umfang der Zentralbohrung, so dass die aus der Zentralbohrung austretende Reinigungsflüssigkeit das Verdichterrad entlang dem Umfang auch gleichmässig reinigen kann.

Zur gezielten Ausrichtung der Reinigungsflüssigkeit auf die Laufschaufeln des Verdichterrades oder auf zwischen den Laufschaufeln liegende Nabenbereiche, können in die Nabe des Verdichterrades radial nach aussen gerichtete Reinigungsdüsen eingelassen werden. Besonders vorteilhaft sind die Reinigungsdüsen im radial äusseren Bereich der Zentralbohrung angeordnet, so dass die Reinigungsflüssigkeit durch die Zentrifugalbeschleunigung aus der Zentralbohrung durch die Reinigungsdüsen gepresst und auf die zu reinigenden Bereiche des Verdichterrades gerichtet werden kann.

Die Reinigungsdüsen sind je nach Bedarf so ausgerichtet, dass der erzeugte Strahl gebündelt oder divergierend aus der Düse austritt. Ein divergierender Strahl ist vorteilhaft wenn eine grossflächige Verteilung der Reinigungsflüssigkeit angestrebt wird, während der gebündelte Strahl typischerweise auf Oberflächenstellen mit hartnäckiger Verschmutzung gerichtet wird.

Der Strahlteiler, die Zentralbohrung und die Reinigungsdüsen können einzeln oder in beliebiger Kombination in einem Reinigungsaufsatz integriert werden, welcher auf die Nabenspitze des Verdichterrades aufgesetzt und daran befestigt werden kann. Damit können bestehende Verdichterräder auf denkbar einfachste Weise mit der erfindungsgemässen Reinigungsvorrichtung nachgerüstet werden.

Weitere Vorteile ergeben sich aus den abhängigen Patentansprüchen.

### Kurze Beschreibung der Zeichnungen

Der erfindungsgemässe Verdichter mit einer Reinigungsvorrichtung wird anschliessend anhand von Zeichnungen näher erläutert. Hierbei zeigt
- Fig. 1: einen entlang der Achse geführten Schnitt durch einen Verdichter mit einer Reinigungsvorrichtung gemäss dem Stand der Technik,
- Fig. 2: einen entlang der Achse geführten Schnitt durch einen erfindungsgemässen Verdichter mit einer ersten Ausführungsform der Reinigungsvorrichtung,
- Fig. 3: einen entlang der Achse geführten Schnitt durch einen erfindungsgemässen Verdichter mit einer zweiten Ausführungsform der Reinigungsvorrichtung,
- Fig. 4: einen entlang der Achse geführten Schnitt durch einen erfindungsgemässen Verdichter mit einer dritten Ausführungsform der Reinigungsvorrichtung mit einem Reinigungsaufsatz mit mehreren Reinigungsdüsen,
- Fig. 5: einen Schnitt durch den Reinigungsaufsatz nach Fig. 4, und
- Fig. 6 und 7: jeweils einen Schnitt durch zwei unterschiedlich ausgebildete Reinigungsdüsen des Reinigungsaufsatzes nach Fig. 5.

### Weg zur Ausführung der Erfindung

Wie bereits eingangs erwähnt zeigt Fig. 1 eine Verdichteranordnung mit einer herkömmlichen Reinigungsvorrichtung. Zum Einführen der Reinigungsflüssigkeit in den Strömungskanal 4 sind von radial ausserhalb des Verdichtergehäuses 3 oder in einer alternativen Ausführungsform wie sie von gewissen Verdichterherstellern verwendet wird im Bereich eines Gehäusemittelstücks 31 im radial inneren Bereich des Strömungskanals Zuführungen 5' bzw. 5'' in Form von einfachen Schläuchen oder dünnen Rohren in den Strömungsbereicht geführt. Durch diese Zuführungen kann zum Reinigen des Verdichterrades 1 zum geeigneten Zeitpunkt die benötigte Menge Reinigungsflüssigkeit in den Strömungskanal eingespritzt werden. Die Reinigungsflüssigkeit wird im Betrieb von der Strömung erfasst und in den Bereich der Laufschaufeln des rotierenden Verdichterrades befördert.

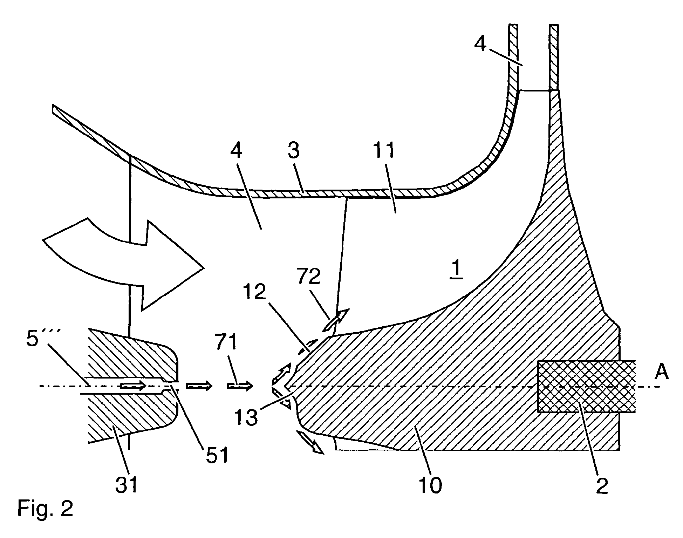

Im Unterschied zu den Ausführungsformen gemäss dem Stand der Technik ist bei der erfindungsgemässen Verdichterreinigung die Zuführung 5''' für die Reinigungsflüssigkeit zentral angeordnet. Wie in Fig. 2 dargestellt, ist die Zuführungsdüse 51, durch welche der Reinigungsstrahl in den Bereich des Verdichterrades eingespritzt wird, koaxial auf und in Richtung der Achse A des Verdichterrades 1 angeordnet. Die Zuführdüse ist beispielsweise in einem Gehäusemittelstück 31 angeordnet, kann aber auch von radial ausserhalb des Verdichtergehäuses mittels einer Durchführung durch den Ansaugbereich des Verdichters im Zentrum befestigt sein.

Aus strömungstechnischer Sicht gesehen liegt der Zuführstrahl 71 bei einem Radialverdichter auf einer der Achse entlang geführten Strömungslinie. Damit kann die Reinigungsflüssigkeit auch im Volllastbetrieb des Verdichters und entsprechend starker Strömung mit grosser Präzision auf das Verdichterrad gerichtet eingespritzt werden. Obschon der Zuführstrahl 71 der Reinigungsflüssigkeit im Zentrum des Verdichterrades erfolgt, wird die Reinigungsflüssigkeit entlang der Nabenoberfläche und den Laufschaufelfüssen durch die grossen Fliehkräfte in die äusseren Bereiche des Verdichterrades, insbesondere der Laufschaufeln 11 getragen, so dass eine vollständige Benetzung des Verdichterrades erfolgt.

Der Zuführstrahl trifft auf die Nase der Nabe 10 des Verdichterrades 1 und wird dort aus der axialen in die radiale Richtung umgelenkt. Um die Umlenkung zu unterstützen und um die gleichmässige Verteilung der Reinigungsflüssigkeit zu gewährleisten, ist in der ersten Ausführungsform der erfindungsgemässen Verdichterreinigung nach Fig. 2 die Nase der Nabe des Verdichterrades zu einem Stromteiler 13 geformt. Beim Stromteiler handelt es sich im Wesentlichen um eine axial gerichtete Spitze mit radial nach aussen abfallenden Flanken. Die Flanken können dabei kontinuierlich, oder aber in einzelne, dreieckförmige Segmente unterteilt ausgebildet sein.

Um den in die radiale Richtung umgeleiteten Reinigungsflüssigkeitsstrom gezielt auf einzelne Bereiche der zu reinigenden Oberflächen zu richten, können radial ausserhalb des Zentrums der Nabe Reinigungsdüsen 12 in Form von Bohrungen oder nutenförmigen Ausnehmungen in die Oberfläche der Nabe eingelassen sein. Durch die Reinigungsdüsen kann ein stetiger Reinigungsdüsenstrahl 72 auf die immergleiche Stelle des Verdichterrades gerichtet werden, da sich die Düsen relativ zu den zu reinigenden Stellen ja nicht bewegen.

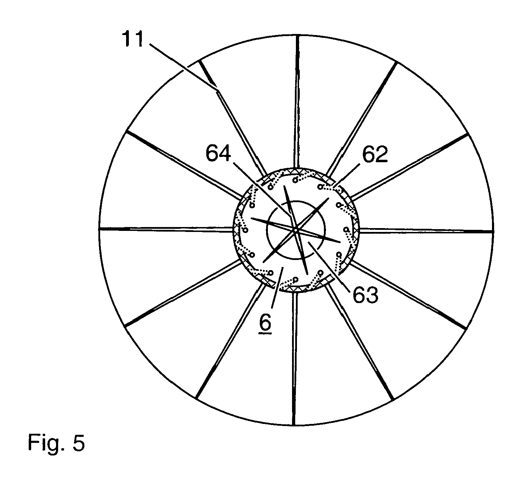

Vorteilhafterweise wird pro Laufschaufel eine Waschdüse angeordnet, wie dies auch im Schnittbild nach Fig. 5 schematisch angedeutet ist.

Es ist auch denkbar, dass entlang dem Umfang unterschiedlich ausgerichtete Reinigungsdüsen angeordnet sind, so dass etwa eine Reihe von ersten Düsen auf die Laufschaufeln gerichtet ist und jeweils zwischen den Düsen der ersten Reihe angeordnete, zweite Düsen auf zu reinigende Bereiche der Oberfläche der Nabe gerichtet sind.

Damit der sich auf der Oberfläche der Nase der Nabe bildende Reinigungsflüssigkeitsfilm in die Düsen eindringt, können radial ausserhalb der Düsen kleine Vorsprünge angebracht sein, welche den Fluss der Reinigungsflüssigkeit in radialer Richtung hemmen. Alternativ kann ein umlaufender, ringförmiger Vorsprung vorgesehen sein, welcher die Reinigungsflüssigkeit rundum staut.

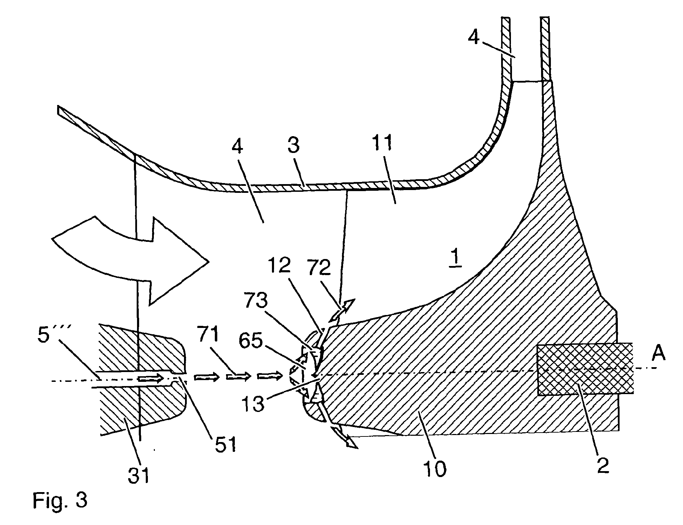

Um bei der radialen Umlenkung des Zuführstrahls 71 die Reinigungsflüssigkeit noch besser fassen zu können, ist gemäss der zweiten Ausführungsform der erfindungsgemässen Verdichterreinigung nach Fig. 3 in die Nase der Nabe 10 eine Zentralöffnung 15 eingelassen. Der Zuführstrahl 72 wird nach der Umlenkung innerhalb der Zentralöffnung 15 gehalten, so dass sich an der radialen Aussenwand der Zentralöffnung ein umlaufender Ring 73 aus Reinigungsflüssigkeit bildet. Auf diese Weise geht von der mit hohem Druck auf die Nabe des Verdichterrades gespritzten Reinigungsflüssigkeit wenig verloren, allfällige radial gerichtete Spritzer werden von der radialen Aussenwand der Zentralöffnung zurückgehalten. Durch die Stauung der Reinigungsflüssigkeit an der radialen Aussenwand der Zentralöffnung kommt es zu einer Druckerhöhung in der Reinigungsflüssigkeit. Die Reinigungsflüssigkeit tritt entweder durch Überlauf aus der Zentralöffnung aus, oder durch in den radialen Aussenbereich der Zentralöffnung eingelassene Reinigungsdüsen 12.

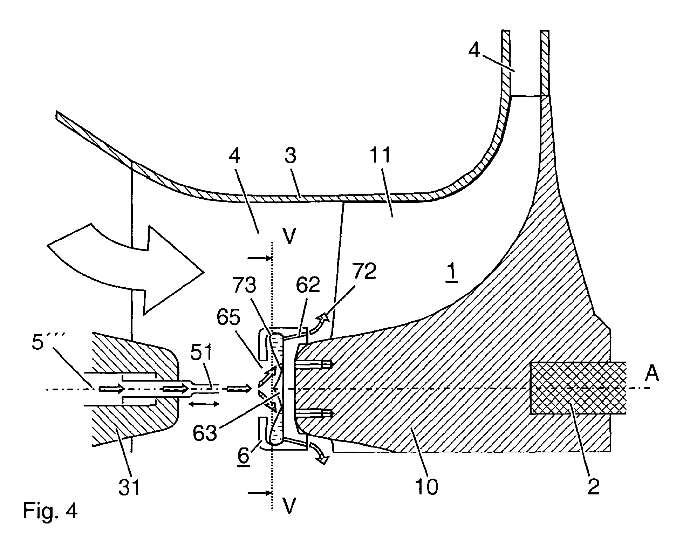

In einer dritten Ausführungsform der erfindungsgemässen Verdichterreinigung nach Fig. 4 sind Zentralöffnung 65, Stromteiler 63 und Reinigungsdüsen 62 in einem separaten Bauteil integriert, dem Reinigungsaufsatz 6. Der Reinigungsaufsatz kann auf die Nabe aufgesetzt und mit Schrauben oder anderen Befestigungsmitteln mit der Nabe verbunden werden. Auf diese Weise lassen sich Verdichter ohne Reinigungsvorrichtung oder Verdichter mit herkömmlichen Reinigungsvorrichtungen nachrüsten.

Beim Auftreffen des Zuführstrahls auf die Oberfläche der Nabe bzw. des Reinigungsaufsatzes sowie bei der Umlenkung in die radiale Richtung wird die Reinigungsflüssigkeit in Umfangsrichtung beschleunigt. Um diese Beschleunigung zu unterstützen, können, wie im Schnitt durch den Reinigungsaufsatz in Fig. 5 dargestellt, Lenkflügel 64 vorgesehen werden, welche nach Art eines Propellers den abgelenkten Zuführstrahl beschleunigen.

Im Schnitt durch den Reinigungsaufsatz 6 sind auch die Reinigungsdüsen 62 zu sehen, welche in der dargestellten Ausführungsform nicht streng radial nach aussen, sonder entsprechend der Rotationsrichtung des Verdichterrades schräg zur Radialen verlaufend in die Wand des Reinigungsaufsatzes eingelassen sind.

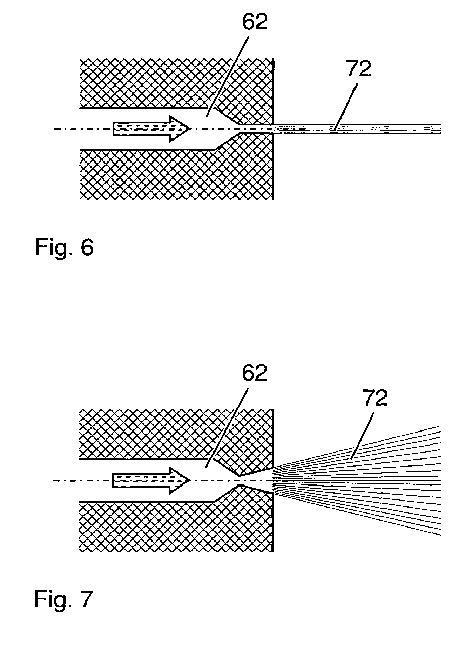

Die Reinigungsdüsen können entsprechend dem zu reinigenden Bereich des Verdichterrades ausgerichtet sein. Je nachdem, ob die gesamten Laufschaufeln 11 oder ein bestimmter, besonders starker Verschmutzung ausgesetzter Teil der Oberfläche der Nabe gereinigt werden soll, können unterschiedlich ausgerichtet und ausgeformte Düsen sinnvoll sein. Über die Ausgestaltung der Öffnungen der Reinigungsdüsen kann schliesslich der Reinigungsdüsenstrahl 72 beeinflusst werden. Wie in den beiden letzten Figuren dargestellt, kann der Strahl gebündelt (Fig. 6) oder divergierend (Fig. 7) die Düsen verlassen.

Die Menge der Reinigungsflüssigkeit, welche durch die Reinigungsdüsen austritt, ist vorteilhafterweise mit der Menge der Reinigungsflüssigkeit, welche mittels Zuführstrahl durch die Zuführdüse dem Verdichterrad zugeführt wird. Die zugeführte Menge sollte dabei geringfügig grösser sein, um allfällige Verluste durch Spritzer wettzumachen.

Um solche Verluste zu verhindern und um die Beeinflussung des Zuführstrahls durch die Strömung des zu verdichtenden Mediums zu reduzieren, kann die Zuführdüse 51 bis auf eine kurze Distanz von, je nach Abmessung des Verdichterrades, einigen mm bis einigen cm an die Nase der Nabe des Verdichterrades heranreichen. Alternativ kann die Zuführdüse wie in Fig. 4 schematisch angedeutet ein- und ausführbar ausgebildet sein. Dadurch kann die Zuführdüse für die Reinigung in die Strömungszone eingeführt werden, während es sonst dank zurückgezogener Düse zu keiner Beeinträchtigung der Strömung kommt.

Als Reinigungsflüssigkeit kann beispielsweise Wasser, mit oder ohne spezielle Aufbereitung, Reinigung oder Temperierung, mit oder ohne Reinigungszusätze verwendet werden.

Die erfindungsgemässe Verdichterreinigung eignet sich besonders zum Reinigen von Radialverdichtern von Abgasturboladern für Brennkraftmaschinen.

### Bezugszeichenliste

- A: Achse
- 1: Verdichterrad
- 10: Nabe
- 11: Laufschaufeln
- 12: Reinigungsdüsen
- 13: Strahlteiler
- 15: Zentralöffnung
- 2: Welle
- 3: Verdichtergehäuse
- 31: Gehäusemittelstück
- 4: Strömungskanal
- 5: Zuführung für Reinigungsflüssigkeit
- 5': Aussenzuführung
- 5'': Innenzuführung
- 5''': Koaxialzuführung
- 51: Zuführdüse
- 6: Reinigungsaufsatz
- 62: Reinigungsdüsen
- 63: Strahlteiler
- 64: Lenkflügel für Reinigungsflüssigkeit
- 65: Zentralöffnung
- 71: Zuführstrahl
- 72: Reinigungsdüsenstrahl
- 73: Reinigungsflüssigkeitsring

## Patentansprüche

1. Verdichter, umfassend ein um eine Achse (A) rotierbares Verdichterrad (1) sowie eine Reinigungsvorrichtung zum Reinigen des Verdichterrades mit einer Zuführung (5''') für eine Reinigungsflüssigkeit, **dadurch gekennzeichnet, dass**
die Zuführung (5''') für die Reinigungsflüssigkeit eine Zuführdüse (51) umfasst, welche auf der Achse (A) angeordnet und in Richtung der Achse ausgerichtet ist, derart dass durch die Zuführdüse ein Zuführstrahl (71) der Reinigungsflüssigkeit entlang der Achse hin zum Verdichterrad leitbar ist.

2. Verdichter nach Anspruch 1, **dadurch gekennzeichnet, dass** Mittel (13, 63) zum Teilen des Zuführstrahls (71) vorgesehen sind, mit welchen der Zuführstrahl in radialer Richtung ablenkbar ist.

3. Verdichter nach einem der vorangehenden Ansprüchen, **dadurch gekennzeichnet, dass** das Verdichterrad eine Zentralöffnung (15) zum Aufnehmen des Zuführstrahls (71) und Weiterleiten der Reinigungsflüssigkeit aufweist.

4. Verdichter nach einem der vorangehenden Ansprüchen, **dadurch gekennzeichnet, dass** am Verdichterrad ein Reinigungsaufsatz (6) befestigt ist, und dass der Reinigungsaufsatz eine Zentralöffnung (65) zum Aufnehmen des Zuführstrahls (71) und Weiterleiten der Reinigungsflüssigkeit aufweist.

5. Verdichter nach einem der Ansprüche 3 oder 4, **dadurch gekennzeichnet, dass** die Zentralöffnung (15, 65) in ihrem radial äusseren Bereich in Reinigungsdüsen (12, 62) mündet, über welche die mit dem Zuführstrahl (71) zum Verdichterrad geleitete Reinigungsflüssigkeit auf zu reinigende Bereiche des Verdichterrades leitbar ist.

6. Verdichter nach einem der Ansprüche 1 bis 4, **dadurch gekennzeichnet, dass** das Verdichterrad Reinigungsdüsen (12, 62) umfasst, über welche die mit dem Zuführstrahl (71) zum Verdichterrad geleitete Reinigungsflüssigkeit auf zu reinigende Bereiche des Verdichterrades leitbar ist.

7. Verdichter nach einem der Ansprüche 5 oder 6, **dadurch gekennzeichnet, dass** die Reinigungsdüsen (12, 62) derart ausgebildet sind, dass die Reinigungsflüssigkeit die Düse als gebündelter Strahl (72) verlässt.

8. Verdichter nach einem der Ansprüche 5 oder 6, **dadurch gekennzeichnet, dass** die Reinigungsdüsen (12, 62) derart ausgebildet sind, dass die Reinigungsflüssigkeit die Düse als divergierender Strahl (72) verlässt.

9. Verdichter nach einem der vorangehenden Ansprüche, **dadurch gekennzeichnet, dass** das Verdichterrad Lenkflügel (64) umfasst, mit welchen die mit dem Zuführstrahl (71) zum Verdichterrad geleiteten Reinigungsflüssigkeit in Umfangsrichtung beschleunigbar ist.

10. Verdichter nach einem der vorangehenden Ansprüche, **dadurch gekennzeichnet, dass** die Zuführdüse (51) in axialer Richtung auf das Verdichterrad verschiebbar ausgebildet ist, so dass zum Zuleiten des Zuführstrahls auf das Verdichterrad die mittels dem Zuführstrahl zu überbrückende Distanz zwischen der Zuführdüse und dem Verdichterrad reduziert werden kann.

11. Verdichterrad, umfassend eine Nabe und auf der Nabe angeordnete Laufschaufeln, **dadurch gekennzeichnet, dass** in die Nabe Mittel zum Aufnehmen und Weiterleiten einer Reinigungsflüssigkeit eingelassen sind.

12. Verdichterrad nach Anspruch 11, **dadurch gekennzeichnet, dass** in die Nabe eine Zentralöffnung (15) eingelassen ist, in welche eine Reinigungsflüssigkeit leitbar ist und welche in ihrem radial äusseren Bereich in Reinigungsdüsen (12) mündet, über welche die in die Zentralöffnung geleitete Reinigungsflüssigkeit auf zu reinigende Bereiche der Nabe und/ oder der Laufschaufeln leitbar ist.

13. Zylinderförmiger Verdichterrad-Reinigungsaufsatz, umfassend eine Zentralöffnung (65), in welche eine Reinigungsflüssigkeit leitbar ist und welche in ihrem radial äusseren Bereich in radial nach aussen gerichtete Reinigungsdüsen (62) mündet, über welche die in die Zentralöffnung geleitete Flüssigkeit radial aus dem Reinigungsaufsatz leitbar ist.

14. Abgasturbolader, **gekennzeichnet durch** einen Verdichter nach einem der Ansprüche 1 bis 10.
